# FASCICULE DE BREVET EUROPEEN

(11) **EP 0 493 207 B1**
(45) Date de publication et mention de la délivrance du brevet: **15.06.1994**
(21) Numéro de dépôt: 91403452.5
(22) Date de dépôt: 19.12.1991
(51) Int. Cl.: F16G 11/00, B63G 7/04

(54) **Dispositif de liaison mécanique entre un élément tracteur et un élément tracté**
Vorrichtung zur mechanische Verbindung eines ziehenden Elements mit einem gezogenen Element
Device for the mechanical coupling of a drawing element to a drawn element

(30) Priorité: 28.12.1990 FR 9016407
(43) Date de publication de la demande: 01.07.1992
(73) Titulaire: ETAT FRANCAIS Représenté par le délégué général pour l'armement, F-00460 Armées (FR)
(72) Inventeur: Scourzic, Daniel, F-29215 Guipavas (FR)

(56) Documents cités:
- FR-A- 2 364 849
- FR-A- 2 524 953
- FR-A- 2 580 357
- FR-E- 87 995
- US-A- 1 521 993

## Description

Le secteur technique de la présente invention est celui des dispositifs de liaison mécanique entre un élément tracteur et un élément tracté utilisant un câble ayant un faible poids mais admettant une charge de rupture élevée. Ce dispositif est plus particulièrement destiné à la réalisation de brins de drague remorqués par un bateau et placés entre le plongeur et le divergent afin d'attaquer des orins de mines par l'intermédiaire de cisailles par exemple placées sur les brins.

Dans ce domaine, les câbles synthétiques ne sont pas utilisés car ils ne supportent pas le glissement des orins de mines qui les détérioreraient par raguage, cette détérioration pouvant aller jusqu'à la rupture du brin de drague.

L'utilisation de brins de drague constitués de câbles en acier, d'un diamètre pouvant varier de quelques millimètres à quelques dizaines de millimètres, présente certains inconvénients. Ces câbles, s'ils admettent généralement une charge de rupture suffisante, présentent un poids dans l'eau trop important. De plus l'aspect extérieur du câble, dû à son toronnage, crée lorsqu'il est remorqué dans l'eau, des efforts de portance, d'autant plus élevés que la vitesse est grande. Ces efforts sur le câble étant faibles lorsque la vitesse d'avance dans l'eau est peu élevée, le poids dans l'eau du câble tend à le déformer en chaînette ; par contre à vitesse élevée, les efforts de portance qui dépendent de la nature du toronnage du câble, deviennent prépondérants et soulèvent le câble.

Les brins constituants ces troncs extérieurs sont noyés dans un matériau synthétique qui donne un aspect lisse au câble et supprime ainsi les effets de portance dûs au toronnage.

Pour remédier à ces inconvénients, un bon compromis consiste à prendre un câble composite tel que décrit dans le brevet FR-A-2 580 357. Ce document montre un câble constitué de torons extérieurs, réalisés en un matériau léger à résistance mécanique élevée tel le "KEVLAR" (marque de Fabrique) et des torons extérieurs en acier entourant complètement les précédents.
Un tel câble composite présente des caractéristiques intéressantes de réduction de poids et de résistance à l'abrasion. Par contre, si on relie les extrémités de ce câble au plongeur d'une part et au divergeant d'autre part, par des moyens d'accrochage classiques faisant prise sur les torons intérieurs du câble ou indifféremment sur les torons extérieurs, la force de traction exercée sur le câble est essentiellement supportée par les torons extérieurs réalisés en matériau métallique. Ceci du fait que les brins métalliques possèdent des caracéristiques d'allongement plus faibles que celles des brins synthétiques.

L'invention a pour but de supprimer l'inconvénient précité, en proposant un dispositif de liaison mécanique permettant de faire supporter la force de traction par l'âme du câble réalisée en matériau synthétique à résistance mécanique élevée tout en protégeant l'âme contre l'abrasion occasionnée par le frottement avec les orins de mines rencontrés lors du draguage.

Pour ce faire l'invention a pour objet un dispositif de liaison mécanique entre un élément tracteur et un élément tracté, constitué par un câble comportant une âme réalisée en matériau synthétique léger à résistance mécanique élevée et une gaine métallique lissée à l'aide d'un matériau de remplissage, et des moyens d'accrochage des extrémités du câble à chaque élément tracteur et tracté, dispositif caractérisé en ce que le moyen d'accrochage de la première extrémité est solidaire de l'âme synthétique et celui de la seconde extrémité est solidaire à la fois de l'âme et de la gaine métallique.

La première extrémité du câble peut comporter une bague d'arrêt fixée sur la périphérie de la gaine métallique.

Selon un premier mode de réalisation, l'âme synthétique est recouverte d'une enveloppe de protection solidaire de l'âme.

Cette enveloppe de protection peut être réalisée en matériau synthétique (polyuréthane par exemple).

Selon un deuxième mode de réalisation, les torons constituant la gaine métallique sont noyés dans un matériau de remplissage.

De façon préférentielle, la première et la seconde extrémité du câble sont respectivement accrochées au plongeur et au divergent.

Le fait de faire supporter la force de traction par l'âme synthétique du câble ainsi que la protection de celle-ci contre l'abrasion sont bien obtenus en laissant la gaine métallique libre en translation longitudinale sur l'âme du câble.

D'autres caractéristiques et avantages de l'invention apparaîtront dans la description détaillée, non limitative, d'un mode de réalisation de l'invention. Cette description sera faite en regard des dessins annexés desquels :
- la figure 1 représente schématiquement une coupe longitudinale du dispositif de liaison mécanique soumis à une force de traction symbolisée par une flèche.
- la figure 2 représente une coupe transversale du câble selon II de la figure 1,
- la figure 3 représente un détail de la figure 2.
- la figure 4 représente un système de dragage de mines sous-marines utilisant le dispositif de liaison mécanique selon l'invention.

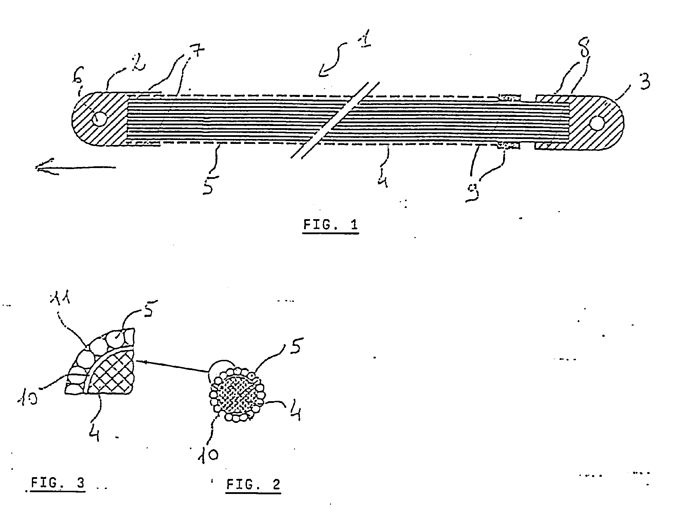

En référence à la figure 1, on voit un dispositif de liaison mécanique constitué d'un câble 1 comportant à chacune de ses extrémités des moyens d'accrochage 2 et 3. Le câble est réalisé de façon connue par une âme centrale 4 constituée de torons en matériau synthétique léger à résistance mécanique élevée du type "KEVLAR" ou carbone. L'âme synthétique est entourée d'une gaine 5 réalisée en matériau métallique tel que l'acier par exemple. Le moyen d'accrochage 2 est constitué d'une pièce de type connu comportant une première partie pourvue d'un orifice d'accrochage 6 et une seconde partie 7 solidarisée à la fois avec la gaine métallique et l'âme synthétique, cette dernière jouant le double rôle de reprise d'effort et d'arrêt de la gaine métallique. Le moyen d'accrochage 3, situé à l'autre extrémité du câble, est constitué d'une pièce semblable à la précédente. La partie 8 de cette pièce est uniquement solidarisée avec l'âme synthétique du câble . Une bague d'arrêt 9 est fixée sur la périphérie de la gaine afin d'éviter le décommetage des brins métalliques constituant cette gaine.

La bague est mobile en translation longitudinale sur l'âme du câble.

Les figures 2 et 3 montrent plus particulièrement les différents éléments constitutifs du câble. On voit notamment que l'âme synthétique est recouverte d'une enveloppe cylindrique 10 solidarisée avec l'âme par collage ou tout autre moyen. Cette enveloppe assure une meilleure protection de l'âme contre les frottements exercés par la gaine sur celle-ci. L'enveloppe est réalisée en un matériau synthétique tel que du polyuréthane par exemple. A la surface externe du câble les torons métalliques constituant la gaine sont noyés dans un matériau de remplissage 11 pour assurer une meilleure cohésion de l'ensemble.

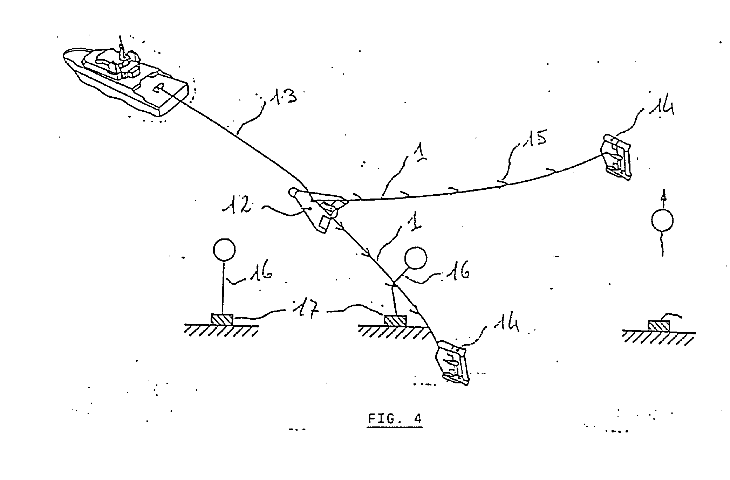

La figure 4 montre un système de dragage de mines sous-marines utilisant le dispositif de liaison mécanique selon l'invention. La première extrémité du câble comportant la pièce d'accrochage solidarisée à la fois avec l'âme synthétique et la gaine métallique est reliée au plongeur 12. Ce dernier est tracté par un bateau par l'intermédiaire d'un câble de remorque 13.

La seconde extrémité du câble munie de la pièce d'accrochage solidarisée uniquement à l'âme est reliée au divergent 14. Des cisailles 15 sont fixées sur le câble pour couper les orins 16 de mines 17 rencontrés lors du dragage.

Le dispositif fonctionne de la façon suivante. Lorsque la force de traction engendrée par l'élément tracteur s'exerce sur l'extrémité du câble reliée au plongeur, une force résistante de sens contraire s'exerce sur l'autre extrémité du câble accrochée au divergent. Cette dernière extrémité étant reliée uniquement à l'âme synthétique et le coefficient d'allongement des torons synthétiques étant plus important que celui des torons métalliques, la gaine se déplace légèrement en direction du plongeur comme représenté sur la figure 1. Ce déplacement reste suffisamment faible pour que la gaine métallique puisse continuer à recouvrir la quasi totalité de l'âme synthétique du câble.

Lorsque la force de traction n'est plus exercée sur le câble, la gaine métallique reprend sa position initiale en ramenant la bague d'arrêt en contact avec la partie avant de la pièce d'accrochage reliée au divergent.

## Revendications

1. Dispositif de liaison mécanique entre un élément tracteur et un élément tracté, constitué par un câble (1) comportant une âme réalisée en matériau synthétique léger à résistance mécanique élevée entouré d'une gaine métallique (5), et des moyens d'accrochage des extrémités du câble à chaque élément tracteur et tracté,
caractérisé en ce que le moyen d'accrochage de la première extrémité (3) du câble est solidaire de l'âme synthétique (4) et celui de la seconde extrémité (2) du câble est solidaire à la fois de l'âme et de la gaine métallique (5).

2. Dispositif selon la revendication 1 caractérisé en ce que la première extrémité du câble comporte une bague d'arrêt (9) fixée sur la périphérie de la gaine métallique.

3. Dispositif selon la revendication 2 caractérisé en ce que l'âme synthétique est recouverte d'une enveloppe de protection (10) solidaire de l'âme, interposée entre l'âme et la gaine métallique.

4. Dispositif selon la revendication 3 caractérisé en ce que l'enveloppe de protection (10) est réalisée en matériau synthétique.

5. Dispositif selon la revendication 4 caractérisé en ce que les torons constituant la gaine métallique sont noyés dans un matériau de remplissage (11).

6. Application du dispositif de liaison mécanique selon l'une quelconque des revendications 1 à 5 à un système de dragage de mines sous-marines où la première et la seconde extrémité du câble sont respectivement accrochées à un plongeur (12) tracté et à divergent (14).

## Patentansprüche

1. Mechanische Verbindungsvorrichtung zwischen einem Zugelement und einem gezogenen Element, bestehend aus einem Seil (1) mit einem Kern aus leichtem synthetischem Werkstoff mit hoher mechanischer Beständigkeit und von einem Metallmantel (5) umhüllt, und aus Einhängemitteln der Kabelenden am Zugelement und am gezogenen Element, dadurch gekennzeichnet, daß das Einhängemittel des ersten Seilendes (8) mit dem synthetischen Kern (4) ein Stück bildet und dasjenige des zweiten Seilendes (2) gleichzeitig mit dem Kern und dem Metallmantel (5) ein Stück bildet.

2. Vorrichtung nach Anspruch 1, dadurch gekennzeichnet, daß das erste Seilende einen auf dem Umfang des Metallmantels befestigten Haltering (9) aufweist.

3. Vorrichtung nach Anspruch 2, dadurch gekennzeichnet, daß der Synthetikkern von einer mit dem Kern ein Stück bildenden Schutzhülle (10) umgeben ist, die zwischen dem Kern und dem Metallmantel angeordnet ist.

4. Vorrichtung nach Anspruch 3, dadurch gekennzeichnet, daß die Schutzhülle (10) aus einem synthetischen Werkstoff hergestellt ist.

5. Vorrichtung nach Anspruch 4, dadurch gekennzeichnet, daß die den Metallmantel bildenden Litzen in einen Füllstoff (11) eingelassen sind.

6. Anwendung der mechanischen Verbindungsvorrichtung nach einem der Ansprüche 1 bis 5 in einem Untersee-Minensuchsystem, wobei das erste und zweite Seilende jeweils in einen gezogenen Tauchkolben (12) und einen Divergierer (14) eingehängt sind.

## Claims

1. Mechanical linkage device between a towing element and a towed element, consisting of a cable (1) comprising a core made of lightweight synthetic material of high mechanical strength, surrounded by a metal sheath (5), and means of attaching the ends of the cable to both the towing and towed elements, characterised in that the means of attaching the first end (3) of the cable is fastened to the synthetic core (4) and that the means of attaching the second end (2) of the cable is fastened both to the core and to the metal sheath (5).

2. Device according to claim 1 characterised in that the first end of the cable comprises a locking ring (9) attached to the periphery of the metal sheath.

3. Device according to claim 2 characterised in that the synthetic core is covered by a protective casing (10) attached to the core, interposed between the core and the metal sheath.

4. Device according to claim 3 characterised in that the protective casing (10) is made of synthetic material.

5. Device according to claim 4 characterised in that the strands constituting the metal sheath are covered by a filler material (11).

6. Application of the mechanical linkage device according to any of claims 1 to 5 to a system of undersea mine dragging where the first and second ends of the cable are fastened to a towed sinker (12) and a otter board (14) respectively.
